# EUROPÄISCHE PATENTANMELDUNG

(11) **EP 0 844 717 A2**
(43) Veröffentlichungstag der Anmeldung: **27.05.1998**
(21) Anmeldenummer: 97118454.4
(22) Anmeldetag: 23.10.1997
(51) Int. Cl.: H02G 15/013, H02G 15/076

(54) **Spannring für Flanschverbindungen bei Kabelgarnituren oder Rohren**

(30) Priorität: 21.11.1996 DE 19648292
(71) Anmelder: RXS Kabelgarnituren Gesellschaft mit beschränkter Haftung, 58093 Hagen (DE)
(72) Erfinder: Behrendt, Martin, 58093 Hagen (DE); Winterhoff, Hans, 79761 Waldshut-Tiengen (DE)
(74) Vertreter: Fuchs, Franz-Josef, Dr.-Ing.

(57) **Zusammenfassung**

Bei der Erfindung handelt es sich um einen Spannring (SR), der aus mehreren Teilringsegmenten (SRS) gebildet ist. Diese Teilringsegmente (SRS) werden von einem Spannband (SB) umfaßt, und werden beim Spannen radial einwärts auf das Dichtungssystem gepreßt.

## Beschreibung

Die Erfindung betrifft einen Spannring für Flanschverbindungen bei Dichtungssystemen mit einer umlaufenden Spannringnut zur Aufnahme von Abschlußflanschen an Kabelgarnituren oder Rohren.

Aus der europäischen Patentanmeldung EP 0 236 141 - A2 ist eine Kabelgarnitur in Form einer Haubenmuffe bekannt, bei der zum Verschließen des stirnseitigen Endes im Zusammenspiel mit einem Dichtungskörper ein Dichtungssystem eingesetzt wird, das mit Hilfe eines umlaufenden Spannringes geschlossen wird.

Weiterhin ist aus der deutschen Offenlegungsschrift DE 44 27 513 - A1 ein Spannring für Flanschverbindungen bekannt, bei dem die Flansche der abzudichtenden Kabelgarnitur in einer umlaufenden Nut eines Spannringes zu zusammengepreßt werden. Dieser Spannring weist radial nach auswärts gerichtete Einschnitte auf, die bis zum Nutgrund der umlaufenden Nut geführt sind. Beim Spannen erfolgt somit eine gewisse Formanpassung.

Aufgabe der vorliegenden Erfindung ist, das Verziehen des im Dichtungssystem eingelegten Dichtungsringes beim Schließvorgang und damit das Auftreten von Unregelmäßigkeiten über den Umfang hinweg zu verhindern. Die gestellte Aufgabe wird gemäß der Erfindung mit einem Spannring der Eingangs erläuterten Art dadurch gelöst, daß der Spannring aus mehreren Spannringsegmenten gebildet ist und daß die Spannringsegmente von einem Spannband umfaßt sind.

Bei Spannringverschlüssen bisheriger Art tritt das Problem auf, daß beim Schließen des Spannringes die eingelegte Dichtung verzogen wird, das heißt sie wird je nach Aufbau an einigen Stellen des Dichtungsbereiches gestreckt und an anderen Stellen gestaucht, so daß sich unterschiedliche Belastungen im Dichtungssystem einstellen. Dies tritt vor allem bei Dichtungssystemen auf, die direkt mit dem Spannring in Verbindung sind. An den Verzugsstellen treten dann Undichtigkeiten auf. Der Vorteil des Spannringes gemäß der Erfindung liegt nun darin, daß die Pressung des eingelegten Dichtungsringes nur radial erfolgt, so daß unterschiedliche Dehnungen oder Stauchungen im Umfangsbereich des Dichtungsringes nicht mehr erfolgen. Hierzu wird ein solcher Spannring in einzelne Spannringsegmente unterteilt, die gegeneinander beweglich sind und von außen von einem Spannband umfaßt werden. Durch Einwirkung des außen liegenden Spannringes erfolgt nur eine radial einwärts gerichtete Bewegung der einzelnen Spannringsegmente und eine Bewegung in Umfangrichtung unterbleibt. Dadurch ist eine Dehnung oder Stauchung in Umfangrichtung nicht mehr möglich und der Dichtungsring wird gleichmäßig in radialer Richtung einwärts auf die Dichtflächen gepreßt.

Die Erfindung wird nun anhand von vier Figuren näher erläutert.
- Figur 1: zeigt die Verhältnisse beim Stand der Technik.
- Figur 2: zeigt einen Spannring gemäß der Erfindung in Frontansicht.
- Figur 3: zeigt den Spannring nach Figur 2 in einer Draufsicht.
- Figur 4: zeigt einen Teilquerschnitt durch ein Dichtungssystem einer Kabelgarnitur.

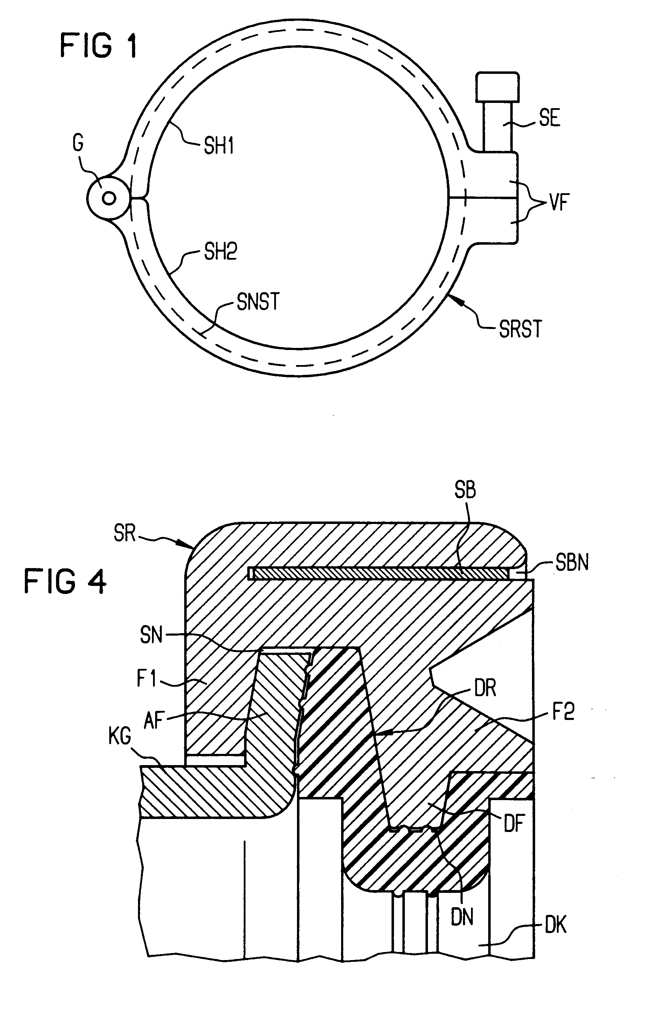

Figur 1 verdeutlicht den Stand der Technik, bei dem ein zweigeteilter Spannring SRST verwendet wird. Die beiden Spannringhälften SH1 und SH2 sind über ein Gelenk G miteinander verbunden und werden auf der gegenüberliegenden Seite mit einer Spanneinrichtung SE, die in Verschlußflanschen F eingesetzt ist, auf das Dichtungssystem aufgespannt. Durch das Einschwenken und anschließende Zusammenziehen der Spannringhälften SH1 und SH2 werden bei dem in der Spannringnut SNST eingelegten Dichtungsring Dehnungen und Stauchungen hervorgerufen, die zu Unregelmäßigkeiten und Undichtigkeiten im Dichtungsbereich führen können.

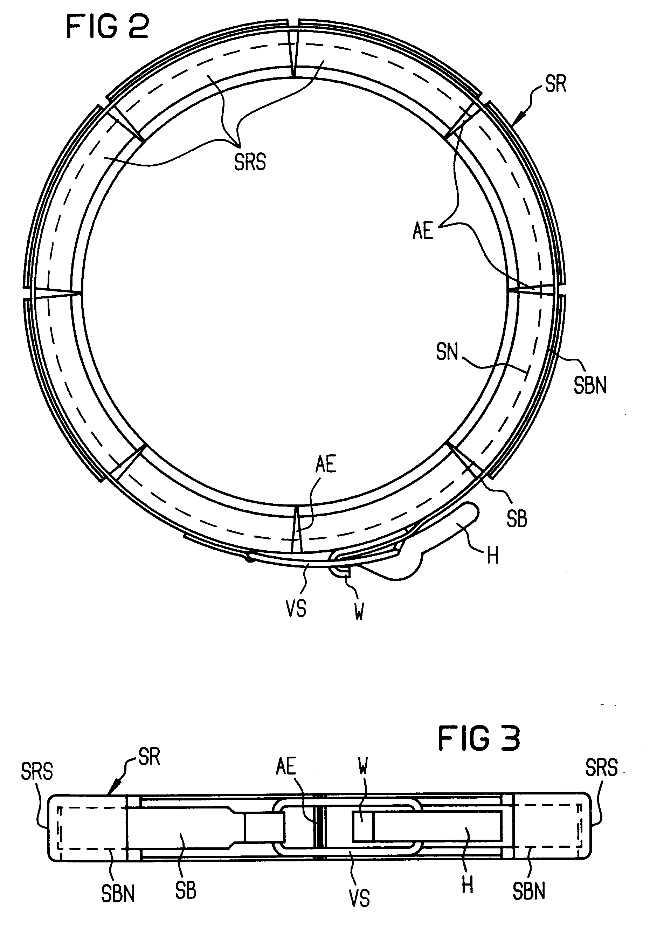

In Figur 2 wird nun die Lösung des Problems mit einem Spannring gemäß der Erfindung dargestellt. So wird hier der auf das Dichtungssystem einwirkende Spannring SR in mehrere Spannringsegmente SRS unterteilt, die beweglich zueinander geführt werden. Zwischen den einzelnen Spannringsegmenten SRS können beispielsweise Ausgleichselemente AE bzw. Führungselemente eingesetzt werden, die entweder lose in den Zwischenräumen oder beweglich an den einzelnen Spannringsegmenten SRS angeordnet sind. Auf den Außenseiten dieser Spannringsegmente SRS wird dann ein Spannelement, zum Beispiel ein Spannband SB, geführt, das durch Spannen gleichmäßig auf die Spannringsegmente SRS radial nach einwärts einwirkt. Dadurch erfolgt ein gleichmäßiges Aufsetzen und Zusammenziehen der Spannringsegmente SRS auf den in der Spannringnut SN eingelegten Dichtungsring in radialer Richtung. Auf diese Weise kann eine Dehnung oder Stauchung des Dichtungsringes in Umfangrichtung nicht mehr erfolgen, so daß keine Unregelmäßigkeiten dieser Art mehr im Dichtungsbereich auftreten können. Die Folge davon ist, daß über den gesamten Umfang hinweg gleiche Dichtungsverhältnisse herrschen. Das Spannband SB kann entweder auf der äußeren Umfangfläche der einzelnen Spannringsegmente SRS aufgesetzt oder in speziellen Spannbandnuten SBN der Ringsegmente SRS aufgezogen bzw. eingezogen werden. Vorzugsweise ist das Spannband unverlierbar in Position gehalten, so daß eine Grundform des gesamten Spannringes SR bereits vorgegeben ist. Auf diese Weise wird die Montage wesentlich erleichtert. Das Spannband wird mit einem Hebelverschluß H gespannt, in den zum Beispiel eine Verschlußschlaufe VS des Spannbandes SB und ein Widerlager W eingreifen. Doch sind auch andere an sich bekannte Spannverschlüsse möglich, wie zum Beispiel Klemmverschlüsse oder Schraubverschlüsse, bei denen Schraubelemente auf Stützelemente einwirken. Bei dieser Ausführungsform wird das Spannband SB in einer in den einzelnen Spannringsegmenten SRS eingelassenen einseitig offenen, umlaufenden Spannbandnut SBN geführt, wodurch bereits eine Führung der einzelnen Spannringsegmente SRS in der Grundform gegeben ist.

Figur 3 zeigt die erfindungsgemäße Ausführung des Spannringes SR nach Figur 2 in einer Draufsicht im Bereich des Verschlußmechanismus. So ist erkennbar, daß das Spannband SB im Spannbereich aus den Spannbandnuten SBN austritt, einerseits zu einer Verschlußschlaufe VS und andererseits zu einem Widerlager W gefaßt und mit Hilfe des Hebelverschlusses H gespannt wird. Die Ausgleichselemente AE können entweder lose zwischen den Spannringsegmenten SRS eingefügt oder auch beweglich und unverlierbar an den einzelnen Spannringsegmenten SRS angeordnet sein.

In Figur 4 werden in einem Teilquerschnitt Verhältnisse des Dichtungssystems mit einem Spannring SR gemäß der Erfindung aufgezeigt. Normalerweise werden in der Spannringnut SN jeweils nur die Ansatzflansche AF und der Dichtungsring DR gefaßt; doch hier wird ergänzend eine Spezialausführung gezeigt, bei der zusätzlich eine Flanke F2 des Spannringes SR als Dichtungsfeder DF verlängert ist. Diese Dichtungsfeder DF wirkt in eine Dichtungsnut DN des Dichtungsringes DR ein, so daß der Dichtungsring DR zusätzlich in der Dichtungsnut des Dichtungskörpers DK der Kabelgarnitur eingepreßt wird. Im oberen Teil der Spannringnut SN erfolgt dann die Verpressung des Ansatzflansches AF der Kabelgarnitur KG mit der anliegenden Flanke F1 des Spannringes SR, wobei der Spannring SR radial von außen auf die Anordnung durch das Schließen des Spannbandes SB erfolgt. Das Spannband SB wird bei diesem Ausführungsbeispiel in einer Spannbandnut SBN des Spannringes SR geführt, die einseitig offen ist, so daß der Spannring SB seitlich eingeführt werden kann.

Die Spannringelemente gemäß der Erfindung können gleich lang oder auch verschieden lang sein, wodurch eine noch bessere Anpassung an die Form des Dichtungssystems erfolgen kann. Das Dichtungssystem kann sowohl kreisförmig als auch oval oder eiförmig ausgebildet sein, wobei die einzelnen Spannringsegmente entsprechend der Form des Dichtungssystems angepaßt sind. Die Spannringnut des Spannringes, die sich aus den einzelnen Teilnuten der Spannringsegmente zusammensetzt, ist im allgemeinen konisch ausgebildet und verengt sich zum Nutgrund hin.

Der Spannring bzw. die Spannringsegmente können sowohl aus Metall als auch aus druck- oder reißfestem Kunststoff gefertigt werden.

## Patentansprüche

1. Spannring für Flanschverbindungen bei Dichtungssystemen in einer umlaufenden Spannringnut zur Aufnahme von Abschlußflanschen an Kabelgarnituren oder Rohren,
**dadurch gekennzeichnet,**
daß der Spannring (SR) aus mehreren Spannringsegmenten (SRS) gebildet ist und daß die Spannringsegmente (SRS) von einem Spannband (SB) umfaßt sind.

2. Spannring nach Anspruch 1,
**dadurch gekennzeichnet,**
daß zwischen den einzelnen Spannringsegmenten (SRS) die Trennstellen überbrückende Ausgleichselemente (AE) angeordnet sind.

3. Spannring nach Anspruch 2,
**dadurch gekennzeichnet,**
daß die Ausgleichselemente (AE) als separate Einzelelemente eingefügt sind.

4. Spannring nach Anspruch 2,
**dadurch gekennzeichnet,**
daß die Ausgleichselemente (AE) an den Spannringsegmenten (SRS) angeordnet sind.

5. Spannring nach einem der Ansprüche 2 bis 4,
**dadurch gekennzeichnet,**
daß die Ausgleichselemente (AE) federnd angeordnet sind.

6. Spannring nach einem der vorhergehenden Ansprüche,
**dadurch gekennzeichnet,**
daß das Spannband (SB) auf den Außenflächen der Spannringsegmente (SRS) aufgesetzt ist.

7. Spannring nach einem der Ansprüche 1 bis 5,
**dadurch gekennzeichnet,**
daß das Spannband (SB) in einer sich aus Spannbandnuten (SBN) der einzelnen Spannringsegmente (SRS) umlaufend zusammengesetzten Spannbandnut (SBN) angeordnet ist.

8. Spannring nach einem der vorhergehenden Ansprüche,
**dadurch gekennzeichnet,**
daß das Spannband (SB) unverlierbar mit den Spannringsegmenten (SRS) verbunden ist, wobei die Grundform des Spannringes (SR) der Form des Dichtungssystems vorgebildet ist.

9. Spannring nach einem der vorhergehenden Ansprüche,
**dadurch gekennzeichnet,**
daß das Spannband (SB) mit einem Hebelverschluß (H) versehen ist.

10. Spannring nach einem der Ansprüche 1 bis 8,
**dadurch gekennzeichnet,**
daß das Spannband (SB) mit einem Klemmverschluß versehen ist.

11. Spannring nach einem der Ansprüche 1 bis 8,
**dadurch gekennzeichnet,**
daß das Spannband (SB) mit einem auf Stützelemente wirkenden Schraubverschluß versehen ist.

12. Spannring nach einem der vorhergehenden Ansprüche,
**dadurch gekennzeichnet,**
daß die Spannringsegmente (SRS) gleich lang sind.

13. Spannring nach einem der Ansprüche 1 bis 11,
**dadurch gekennzeichnet,**
daß die Spannringelemente (SRS) verschieden lang sind.

14. Spannring nach einem der vorhergehenden Ansprüche,
**dadurch gekennzeichnet,**
daß die Spannringelemente (SRS) bei einem kreisförmigen Verschlußsystem entsprechend teilkreisförmig ausgebildet sind.

15. Spannring nach einem der Ansprüche 1 bis 13,
**dadurch gekennzeichnet,**
daß die Spannringelemente (SRS) bei einem ovalen oder eiförmigen Verschlußsystem dem jeweiligen Teilbereich entsprechend angepaßte Umfangsform aufweist.

16. Spannring nach einem der vorhergehenden Ansprüche,
**dadurch gekennzeichnet,**
daß der Spannring (SR) eine konisch sich verengende Spannringnut (SN) zur Aufnahme eines Abschlußflansches (AF) einer Kabelgarnitur (KG) oder eines Rohres und eines Dichtungsringes (DR) aufweist.

17. Spannring nach Anspruch 16,
**dadurch gekennzeichnet,**
daß jeweils eine Flanke (F2) der Spannringnut (SN) eines Spannringsegmentes (SRS) als umlaufende Dichtungsfeder (DF) verlängert ist, die in eine umlaufende Dichtungsnut (DN) des Dichtungsringes (DR) eintaucht.
